# EUROPÄISCHE PATENTSCHRIFT

(11) **EP 3 733 349 B1**
(45) Veröffentlichungstag und Bekanntmachung des Hinweises auf die Patenterteilung: **06.07.2022**
(21) Anmeldenummer: 20167492.6
(22) Anmeldetag: 01.04.2020
(51) Int. Cl.: B25B 29/02

(54) **SPANNVORRICHTUNG FÜR EINE SCHRAUBVERBINDUNG**
TENSIONING DEVICE FOR A SCREW CONNECTION
DISPOSITIF DE SERRAGE POUR UN RACCORDEMENT À VIS

(30) Priorität: 30.04.2019 DE 102019111185
(43) Veröffentlichungstag der Anmeldung: 04.11.2020
(73) Patentinhaber: Hohmann, Frank, 59581 Warstein (DE); Hohmann, Jörg, 59872 Meschede (DE)
(72) Erfinder:
(74) Vertreter: Janke Scholl Patentanwälte PartG mbB

(56) Entgegenhaltungen:
- EP-A1- 2 871 027
- WO-A1-2010/054959
- WO-A2-2020/126099
- DE-A1- 2 061 037

## Beschreibung

Die Erfindung betrifft eine Spannvorrichtung für eine Schraubverbindung bestehend aus einem Gewindebolzen und einer Gewindemutter, mit einem die Gewindemutter umgebenden Stützrohr, einem Zylindergehäuse in Verlängerung des Stützrohrs, einem in dem Zylindergehäuse mittels Hydraulikdruck bewegbaren Kolben, einer durch den Kolben axial mitnehmbaren Wechselbuchse, welche mit einem Innengewinde zum Verschrauben der Wechselbuchse mit dem Gewindebolzen versehen ist, einem innerhalb des Stützrohrs angeordneten, mit der Gewindemutter kraft- oder formschlüssig verbindbaren Mitnehmer, und einer Getriebeanordnung zwischen einem außerhalb des Stützrohrs drehgelagerten Antriebselement, welches mit einer Werkzeugfläche zum Ansetzen eines Handwerkzeugs versehen ist, und dem Mitnehmer.

Spannvorrichtungen zum Spannen von Schraubverbindungen mit diesen Merkmalen sind aus der DE 10 2004 043 145 B3, der WO2010/054959 A1 und der WO 2008/092768 A2 bekannt. Die Spannvorrichtung verfügt über einen hydraulischen Spannzylinder, der außen mit einem Getriebe versehen ist. Während Hydraulikdruck in den Spannzylinder eingespeist wird, erfolgt das Beidrehen der Gewindemutter. Zu diesem Zweck befindet sich in einem Stützrohr, welches den unteren Teil des Spannzylinders bildet, ein Mitnehmer in der Gestalt einer die Gewindemutter formschlüssig umgebenden Drehhülse. Der Antrieb der Drehhülse erfolgt von Hand mittels eines an eine Werkzeugfläche angesetzten Drehmomentschlüssels, wobei eine Getriebeanordnung den Antriebsweg zwischen der Werkzeugfläche für den Drehmomentschlüssel und der Drehhülse bildet. Zur Aufnahme und zur Drehlagerung der einzelnen Getriebeelemente der Getriebeanordnung ist außen an der Spannvorrichtung ein Antriebsgehäuse befestigt. Die Verwendung des Drehmomentschlüssels als Handwerkzeug zum Beidrehen der Mutter ermöglicht eine Voreinstellung des Auslösewerts, wodurch bei korrekter Handhabung ein zu starkes Anziehen bzw. Beidrehen der Gewindemutter vermieden wird. Vorrausetzung ist allerdings, dass über die Vorwahl des Auslösewerts der für die Schraubverbindung vorgeschriebene Drehmomentwert korrekt eingestellt wird. Dies ist in der Praxis nicht immer gewährleistet, da derselbe Drehmomentschlüssel auch für andere Zwecke eingesetzt wird, etwa für das Aufschrauben der in dem Spannzylinder angeordneten Wechselbuchse auf das freie Ende des Gewindebolzens. Es bedarf daher einer zusätzlichen Kontrolle, ob der aktuell an dem Drehmomentschlüssel eingestellte Auslösewert auf den einen oder auf den anderen Einsatzzweck abgestimmt ist. Außerdem vermag ein Handdrehmomentschlüssel zwar das Erreichen eines bestimmten Drehmoments zu signalisieren, jedoch nicht ein darüber hinausgehendes Drehmoment zu vermeiden.

Die DE 2 061 037 A1 zeigt ebenfalls eine Spannvorrichtung.

Die Relevanz der genannten Probleme zeigt anschaulich auch die Schraubenspannvorrichtung gemäß der WO 2010/054959 A1. Darin wird vorgeschlagen, außen an dem Antriebsgehäuse, welches das Getriebe zum Nachziehen der Gewindemutter aufnimmt, einen ausdrücklichen Hinweis über das maximale Drehmoment anzubringen.

Bei einer aus der US 5,452,629 bekannten Schraubenspannvorrichtung erfolgt das Nachziehen bzw. Beidrehen der Gewindemutter nicht von Hand, sondern unter Einsatz eines nur dafür bestimmten Antriebs. Als Antrieb dient ein Elektromotor, dessen Leistung durch Überwachung des elektrischen Widerstands kontrolliert wird. Der mit der Antriebslast steigende elektrische Widerstand wird dafür herangezogen, die weitere Spannungsversorgung des Elektromotors zu unterbrechen und so zu hohe Anzugsmomente an der Gewindemutter zu vermeiden. Die in der US 5,452,629 vorgeschlagene Lösung ist gerätetechnisch aufwendig, da sie einen eigenen elektrischen Antrieb nur für das Nachziehen bzw. Beidrehen der Gewindemutter erfordert sowie Kontrolleinrichtungen in der elektrischen Versorgung des Antriebs.

Der Erfindung liegt die Aufgabe zugrunde, bei einer mit einem hydraulischen Spannzylinder arbeitenden Schraubenspannvorrichtung mit gerätetechnisch einfachen, mechanischen Mitteln zu hohe Kräfte beim Nachziehen bzw. Beidrehen der Gewindemutter sicher zu vermeiden.

Zur Lösung dieser Aufgabe wird eine Spannvorrichtung für eine Schraubverbindung mit den Merkmalen des Patentanspruchs 1 vorgeschlagen.

Bei dieser Spannvorrichtung ist Bestandteil der Getriebeanordnung, mittels der das Beidrehen der Gewindemutter durchgeführt wird, eine drehmomentabhängig arbeitende Kupplung. Diese Kupplung kann zum Beispiel eine Reibrutschkupplung sein, welche ab einer bestimmten Drehmomentschwelle durchrutscht. Das Drehmoment, mit dem die Gewindemutter während der Aktivierung des hydraulischen Spannzylinders nachgezogen bzw. beigedreht wird, unterliegt auf diese Weise einer eindeutigen und auch bei Fehlbedienung nicht überschreitbaren Beschränkung. Diese Beschränkung ist weitgehend unabhängig vom Handeln des Benutzers. Dieser ist nicht darauf angewiesen, zunächst Einstellungen korrekt durchzuführen, wie etwa das Einstellen des richtigen Auslösewertes im Fall der Verwendung eines Handdrehmomentschlüssels. Die drehmomentabhängig arbeitende Kupplung stellt zuverlässig sicher, dass Maximalwerte nicht überschritten werden können.

Die Verwendung eines speziellen Drehmomentschlüssels ist nicht erforderlich. Vielmehr lassen sich auch einfachere Handwerkzeuge zuverlässig verwenden, sofern diese zum Ansetzen an die vorhandene Werkzeugfläche geeignet sind.

Gemäß einer Ausgestaltung ist die drehmomentabhängig arbeitende Kupplung als eine Überlastkupplung und vorzugsweise als eine Rutschkupplung ausgebildet. Diese ermöglicht bis zum Erreichen eines bestimmten Drehmomentwerts den Kraftfluss, wohingegen sie ab dem Überschreiten dieses Drehmomentwerts den Kraftfluss unterbricht.

Erfindungsgemäß sind Bestandteile der drehmomentabhängig arbeitenden Kupplung druckbelastet gegeneinander abgestützte Kupplungspartner. Der erste Kupplungspartner steht in einer mittel- oder unmittelbaren Drehverbindung mit dem Antriebselement. Der zweite Kupplungspartner steht in einer mittel- oder unmittelbaren Drehverbindung mit dem Mitnehmer.

Eine weitere Ausgestaltung ist gekennzeichnet durch Mittel zum Einstellen der Größe der Druckbelastung zwischen den Kupplungspartnern.

Für eine besonders einfache Bauart der drehmomentabhängig arbeitenden Kupplung ist es von Vorteil, wenn die Kupplungspartner durch mindestens ein Federelement druckbelastet gegeneinander abgestützt sind. In diesem Fall ist das Federelement vorzugsweise mit seinem ersten Ende gegen einen ersten Federsitz, und mit seinem zweiten Ende gegen einen zweiten Federsitz abgestützt. In diesem Fall kann der Abstand der Federsitze zueinander einstellbar sein, um so jenes maximal übertragbare Drehmoment vorzuwählen, ab dem die drehmomentabhängig arbeitende Kupplung den Kraftfluss unterbricht.

Gemäß einer weiteren Ausgestaltung sind an den Kupplungspartnern jeweils flächig aneinander abgestützte Reibflächen ausgebildet.

Eine weitere Ausgestaltung sieht ein Antriebsgehäuse vor, welches zumindest Teile der Getriebeanordnung umschließt. Das Antriebsgehäuse ist außen auf einem Umfangsbereich des Stützrohrs befestigt, auf dem das Stützrohr mit einer Öffnung versehen ist. Ein Getriebeelement der Getriebeanordnung erstreckt sich in die Öffnung hinein. Dieses Getriebeelement steht vorzugsweise mit dem Mitnehmer im Eingriff.

Gemäß einer Variante sind das Antriebselement und die drehmomentabhängig arbeitende Kupplung in dem Antriebsgehäuse angeordnet.

Bei einer alternativen Variante sind das Antriebselement und die drehmomentabhängig arbeitende Kupplung Bestandteile eines an das Antriebsgehäuse lösbar angesetzten Kupplungsmoduls.

Bei dieser alternativen Variante ist Bestandteil des Kupplungsmoduls außerdem ein Formschlusselement, welches in lösbarem Eingriff mit einem in dem Antriebsgehäuse gelagerten Getriebeelement steht, wobei die drehmomentabhängig arbeitende Kupplung zwischen dem Antriebselement und dem Formschlusselement angeordnet ist.

Schließlich wird vorgeschlagen, dass der Mitnehmer eine drehbar in dem Stützrohr angeordnete Drehhülse ist, die an ihrer Innenseite mit Formschlussstrukturen zur Verbindung mit der Gewindemutter versehen ist.

Nachfolgend werden auf den Zeichnungen dargestellte Ausführungsbeispiele der Erfindung näher erläutert. Es zeigen:
- Fig. 1: eine Schraubverbindung bestehend aus einem Gewindebolzen und einer Gewindemutter;
- Fig. 2: in einem Längsschnitt den prinzipiellen Aufbau des Spannzylinders der Spannvorrichtung;
- Fig. 3: in perspektivischer Ansicht die außen mit einem Antriebsgehäuse versehene Spannvorrichtung, aufgesetzt auf die Schraubverbindung, sowie ein an das Antriebsgehäuse angesetztes Handwerkzeug zum Nachziehen bzw. Beidrehen der Gewindemutter der Schraubverbindung;
- Fig. 4: einen Schnitt durch das Antriebsgehäuse der Spannvorrichtung;
- Fig. 5: das Antriebsgehäuse in perspektivischer Darstellung;
- Fig. 6: in perspektivischer Ansicht eine andere Variante der Spannvorrichtung, aufgesetzt auf die Schraubverbindung, sowie ein an die Vorrichtung angesetztes Handwerkzeug zum Nachziehen bzw. Beidrehen der Gewindemutter der Schraubverbindung;
- Fig. 7: einen Schnitt durch ein gemäß Fig. 6 verwendetes Kupplungsmodul.

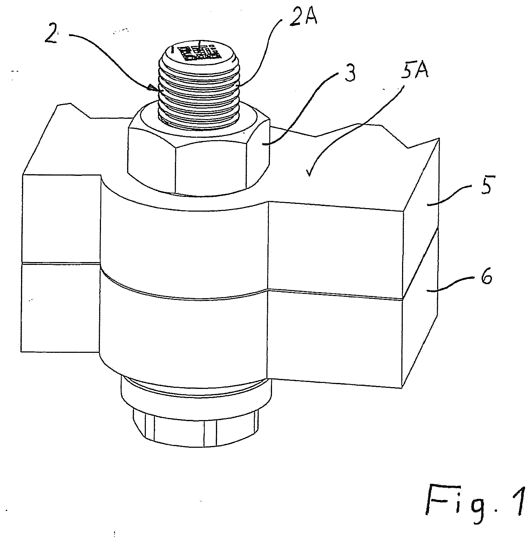

Die Schraubverbindung nach Fig. 1 umfasst einen Gewindebolzen 2, der sich z. B. aus einem erweiterten Bolzenkopf und einem Schaft- und einem Gewindeabschnitt zusammensetzt, und eine auf den Gewindeabschnitt des Gewindebolzens 2 aufgeschraubte Gewindemutter 3. Die Schraubverbindung verspannt hier zwei Maschinenteile 5, 6 gegeneinander, bei denen es sich z.B. um zwei Flansche handelt.

Neben dem Gewindebolzen 2 und der darauf aufgeschraubten Gewindemutter 3 können weitere Elemente Bestandteil der Schraubverbindung sein, beispielsweise eine weitere Mutter auf der der Gewindemutter 3 abgewandten Seite der zu verspannenden Maschinenteile 5, 6. Auch zusätzliche Unterlegscheiben können Bestandteil der Schraubverbindung sein.

Mittels einer Spannvorrichtung 11 in der Bauart als hydraulischer Spannzylinder wird die Schraubverbindung durch Aufbringen einer ausschließlich axialen Zugkraft längsgedehnt. Dabei wird durch axialen Zug an dem über die Gewindemutter 3 hinausragenden Gewindeendabschnitt 2A des Gewindebolzens 2 der Gewindebolzen 2 längsgedehnt, wobei sich vor allem der Schaft- und der Gewindeabschnitt des Gewindebolzens 2 dehnt. Die dabei aufgewendete Anzugskraft und/oder der mittels der Hydraulik aufgewendete Anzugsdruck kann unter Einsatz einer Auswerteeinheit automatisch in einem Dokumentationsmodul gespeichert werden, und steht so für spätere Prüfzwecke zur Verfügung.

Während durch Aktivierung des Spannzylinders für eine gewisse Zeit eine vorgegebene Vorspannkraft auf den Gewindebolzen 2 ausgeübt wird, kann die Gewindemutter 3 durch Drehen angezogen bzw. nachgezogen werden. Dieses sogenannte Beidrehen der Mutter erfolgt von Hand mittels eines Handwerkzeugs 10, z. B. eines Mehrkantschlüssels mit oder ohne integriertem Ratschenmechanismus. Auch das für das Beidrehen der Mutter 3 tatsächlich aufgewendete Anzugsmoment kann automatisch in dem Dokumentationsmodul gespeichert werden.

Eine zentral in einem Zylindergehäuse 7 der Spannvorrichtung längsbeweglich angeordnete Wechselbuchse 12 ist an einem Ende mit einem Innengewinde 13 versehen. Mit dem Innengewinde 13 wird die Wechselbuchse 12 vor dem Spannprozess auf den über die Mutter 3 hinausragenden Gewindeendabschnitt 2A aufgeschraubt. Dieses Aufschrauben erfolgt ebenfalls mit dem Handwerkzeug 10, wozu die Wechselbuchse 12 an ihrem anderen Ende einen Antriebsmehrkant 14 aufweist, an den sich das Handwerkzeug 10 ansetzen lässt.

Beim Spannprozess wird die auf den Gewindebolzen 2 aufgeschraubte Wechselbuchse 12 durch Hydraulikdruck unter axialen Zug gesetzt, wodurch sich der Gewindebolzen 2 in seiner Längsrichtung dehnt. Infolge dessen kommt die Unterseite der Mutter 3 von der Unterlage 5A frei. In diesem Zustand lässt sich die Mutter 3 mit relativ wenig Widerstand drehen und bis zu ihrer erneuten, spaltfreien Auflage auf der Unterlage 5A beidrehen. Das Beidrehen erfolgt mittels des Handwerkzeugs 10. Dessen Dreh- oder Schwenkbewegung wird über eine zwischengeschaltete Getriebeanordnung 15 in eine Drehbewegung der Gewindemutter 3 übertragen wird.

Das unmittelbare Drehen der Mutter 3 erfolgt durch einen in einem Stützrohr 8 gelagerten Mitnehmer 16. Der Mitnehmer 16 ist bei der hier beschriebenen Ausführungsform eine die Mutter 3 umgebende Drehhülse, die an ihrer Innenseite mit Formschlussstrukturen versehen ist und insbesondere mit einem Sechskant, der den an der Mutter 3 angeformten Sechskant formschlüssig umgreift. Angetrieben wird der Mitnehmer bzw. die Drehhülse 16 durch ein als Ritzel ausgebildetes Getriebeelement 17 der Getriebeanordnung 15. Die Getriebeanordnung 15 befindet sich größtenteils in einem Antriebsgehäuse 18, welches als Modul außen an dem Spannzylinder der Spannvorrichtung befestigt ist.

Umschlossen ist der hydraulische Spannmechanismus von dem druckfesten Zylindergehäuse 7. Dessen starre Fortsetzung nach unten bildet das die Gewindemutter 3 umgebende Stützrohr 8. Das Stützrohr 8 kann einstückig mit dem Zylindergehäuse 7 sein, oder ein gegenüber dem Zylindergehäuse 7 separates, z. B. ein daran angesetztes Bauteil. Das Stützrohr 8 ist an seiner Unterseite offen und stützt sich mit dieser Unterseite auf jener festen Unterlage 5A ab, auf der sich auch die Mutter 3 mit ihrer Unterseite abstützt.

An dem Zylindergehäuse 7 befindet sich ein Hydraulikanschluss 20, über den ein hydraulischer Arbeitsraum 21 ventilgesteuert mit einer externen Hydraulikversorgung, zum Beispiel einer Hydraulikpumpe, verbunden ist.

In dem Zylindergehäuse 7 ist, zu der Zylinderinnenwand hin abgedichtet, ein Kolben 25 in Längsrichtung beweglich angeordnet. Durch Einspeisen von hydraulischem Druck in den hydraulischen Arbeitsraum 21 des Spannzylinders hebt der Kolben 25 an. Dies kann beispielsweise entgegen der Kraft einer den Kolben 25 von oben her beaufschlagenden Feder erfolgen, die als Kolbenrückstellfeder dient und bestrebt ist, den Kolben 25 in seiner Grundstellung zu halten, in welcher der hydraulische Arbeitsraum 21 sein Minimum hat.

Der Kolben 25 umgibt ringförmig die Wechselbuchse 12. Er ist an seinem Innenrand mit einem Absatz oder einer Stufe 27 versehen, die, der Unterlage 5A abgewandt, eine Mitnehmerfläche bildet, an der sich die Wechselbuchse 12 abstützt. Speist die Hydraulikpumpe Druckfluid in den Arbeitsraum 21, so hebt der Kolben 25 an und nimmt die Wechselbuchse 12 axial mit. Es kommt zu dem Längsdehnen des Gewindebolzens 2.

Die Wechselbuchse 12 ist an ihrem bolzenseitigen Ende mit dem Innengewinde 13 zum Aufschrauben auf den Gewindebolzen 2 versehen. An ihrem anderen Ende ist die Wechselbuchse 12 mit dem Antriebsmehrkant 14 versehen, an den sich das Handwerkzeug 10 ansetzen lässt, um bei der Vorbereitung des Spannprozesses mit dem Handwerkzeug 10 die Wechselbuchse 12 zu drehen und auf den Gewindebolzen 2 aufzuschrauben.

Zum Drehen der Drehhülse 16 weist das Stützrohr 8 auf jenem Umfangsbereich, auf dem sich das Antriebsgehäuse 18 mit der Getriebeanordnung 15 befindet, eine Öffnung 28 auf. Durch die Öffnung 28 hindurch wird daher die Drehhülse 16 angetrieben. Die Getriebeanordnung 15 bildet daher zusammen mit der Drehhülse 16 eine Einrichtung zum Beidrehen der Mutter 3. Die Mutter 3 kann natürlich nur sinnvoll beigedreht werden, solange der Kolben 25 unter Hydraulikdruck steht.

Die für das Beidrehen benötigte Kraft wird, z. B. durch Hin- und Herbewegen des als Ratschenschlüssel ausgebildeten Handwerkzeugs 10, solange aufgebracht, bis eine Drehmomentbegrenzung jede weitere Steigerung ausschließt. Dazu ist ein Bestandteil der Getriebeanordnung 15 eine drehmomentabhängig arbeitende Kupplung 30 in der Bauart einer Überlastkupplung.

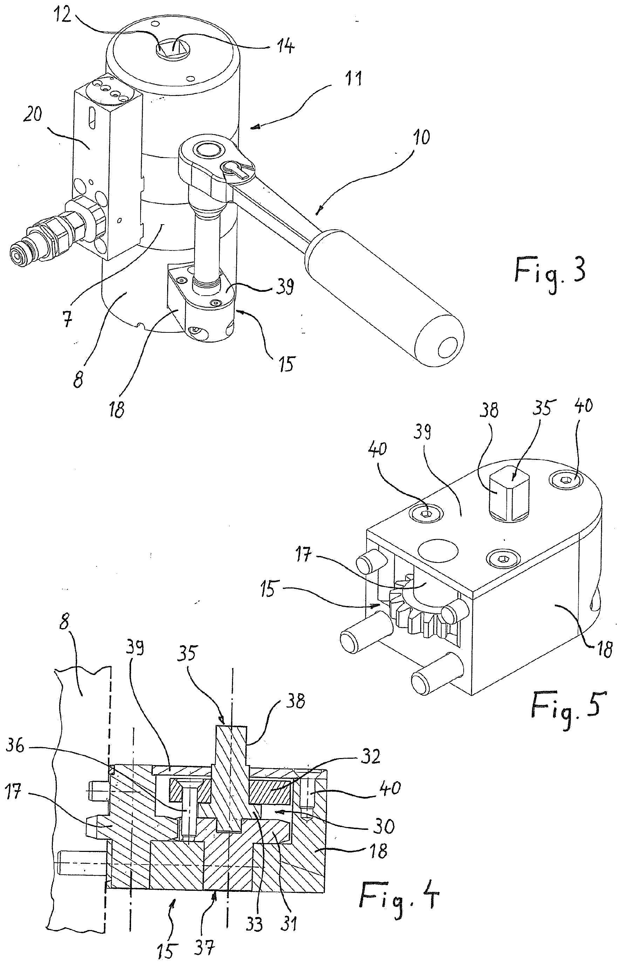

Anhand der Figuren 3, 4 und 5 werden Einzelheiten der Getriebeanordnung 15 bei einer ersten Ausführungsform beschrieben.

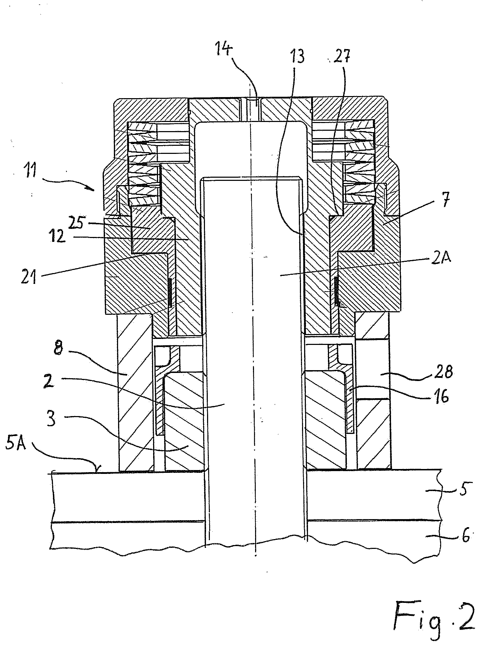

In dem Antriebsgehäuse 18, welches außen an dem Stützrohr 8 befestigt ist, sind auf zwei zueinander parallelen Drehachsen das Getriebeelement 17 und ein weiteres Getriebeelement 37 gelagert. Die Getriebeelemente 17, 37 sind miteinander kämmende Zahnritzel. Das Getriebeelement 17 kämmt zudem mit einer Verzahnung, welche außen an der Drehhülse 16 ausgebildet ist. Hierzu ragt das Getriebeelement 17 in die Öffnung 28 (Fig. 2), mit der das Stützrohr 8 auf dieser Umfangsposition versehen ist.

Das Getriebeelement 37 ist mehrteilig ausgebildet und weist unter anderem eine Werkzeugfläche 38 auf, an die sich das Handwerkzeug 10 mit seiner entsprechend geformten Werkzeugfläche ansetzen lässt.

Der Antriebsweg innerhalb der Getriebeanordnung 15 ist dergestalt, dass mittels des an die Werkzeugfläche 38 angesetzten Handwerkzeugs 10 das Getriebeelement 37 in Drehung versetzt wird, und diese Bewegung über das zwischengeschaltete Getriebeelement 17 auf die in dem Stützrohr 8 gelagerte Drehhülse16 übertragen wird. Durch das Getriebeelement 17 als Zwischenritzel ist sichergestellt, dass die Drehrichtung an der Werkzeugfläche 38 gleichsinnig ist zu der Drehrichtung der Gewindemutter 3 beim Beidrehen.

Bei der Ausführungsform nach den Figuren 3, 4 und 5 ist die drehmomentabhängig arbeitende Kupplung 30 in das Getriebeelement 37 integriert, welches zu diesem Zweck mehrteilig ist. Bestandteile des mehrteiligen Getriebeelements 37 sind eine an ihrem Umfang mit einer Verzahnung versehene erste Scheibe 31, eine mit der ersten Scheibe 31 drehfest gekoppelte zweite Scheibe 32 und eine zwischen den Scheiben 31, 32 angeordnete, dritte Scheibe 33.

Die drei Scheiben 31, 32, 33 mit ihren flach gegeneinander anliegenden Reibflächen sind die Kupplungspartner der Überlastkupplung. Die mittlere Scheibe 33 bildet mit ihren beiden Reibflächen den ersten Kupplungspartner. Ferner ist die gegen die mittlere Scheibe 33 anliegende Flachseite der Scheibe 31 eine Reibfläche, und ebenso ist die gegen die mittlere Scheibe 33 anliegende Flachseite der Scheibe 32 eine Reibfläche. Daher bilden die zueinander drehfesten Scheiben 31, 32 gemeinsam den zweiten Kupplungspartner, welcher über das zwischengeschaltete Getriebeelement 17 in einer mittelbaren Drehverbindung mit der Drehhülse 16 steht.

Gemäß Fig. 4 ist die Scheibe 31 nicht nur zweiter Kupplungspartner, sondern sie ist mit ihrer Verzahnung zugleich das Ritzel, welches über das zwischengeschaltete Getriebeelement 17 die Drehverbindung zu der Drehhülse 16 herstellt.

Die mittlere Scheibe 33 der Kupplung ist einstückiger Bestandteil eines in dem Antriebsgehäuse 18 drehbar gelagerten Antriebselements 35. An dem Antriebselement 35 ist, hier außerhalb des Antriebsgehäuses 18, jene Werkzeugfläche 38 ausgebildet, an die sich das Handwerkzeug 10 ansetzen lässt.

Schrauben 36 mit Schraubenachse parallel zur Kupplungsdrehachse verbinden die äußeren Scheiben 31, 32 miteinander, ohne die mittlere Scheibe 33 zu berühren. Durch Anziehen der Schrauben 36 werden die Scheiben 31, 32 stärker zueinander gezogen, wodurch sich ihr Druck auf die mittlere Scheibe 33 erhöht. Dieser Druck und damit die Reibung zwischen den Scheiben 31, 32, 33 bestimmt das von der drehmomentabhängig arbeitenden Kupplung 30 maximal, d.h. bis zum Durchrutschen übertragbare Drehmoment.

In der Praxis ist eine Veränderung des Drucks und damit der Reibung zwischen den Kupplungspartnern 31, 32, 33 der Überlastkupplung eher selten erforderlich, oder sogar unerwünscht. Daher sind die Schrauben 36 für eine Änderung der Kupplungskraft nur zugänglich, wenn zunächst ein Deckel 39 entfernt wird, welcher Bestandteil des Antriebsgehäuses 18 ist. Der Deckel 39 seinerseits ist durch Schrauben 40 gesichert.

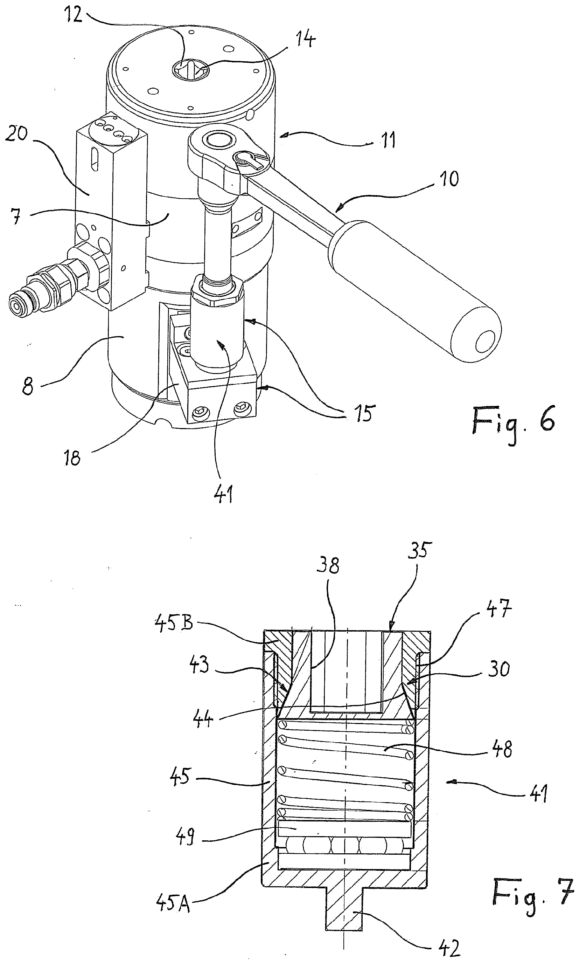

Anhand der Figuren 6 und 7 wird nachfolgend eine zweite Ausführungsform der Getriebeanordnung 15 beschrieben.

Bei dieser Ausführungsform sind das mit der Werkzeugfläche 38 für das Ansetzen des Handwerkzeugs 10 versehene Antriebselement 35 und die drehmomentabhängig arbeitende Kupplung 30 Bestandteile eines Kupplungsmoduls 41. Das Kupplungsmodul 41 ist lösbar an das Antriebsgehäuse 18 angesetzt. Die Einzelteile der Getriebeanordnung 15 befinden sich teilweise in dem an dem Stützrohr 8 befestigten Antriebsgehäuse 18, und teilweise in dem separaten Kupplungsmodul 41.

Bestandteil des Kupplungsmoduls 41 ist ein ein- oder mehrteiliges Gehäuse 45. Das Gehäuse 45 ist, dem darin drehbaren Antriebselement 35 abgewandt, mit einem starr an dem Gehäuse 45 ausgebildeten Formschlusselement 42 versehen ist, z.B. einem Vierkant. Ist gemäß Fig. 6 das Kupplungsmodul 41 an das Antriebsgehäuse 18 angesetzt, greift das Formschlusselement 42 in eine entsprechende Gegenstruktur an dem als Ritzel ausgebildeten Getriebeelement 37 (Fig. 4).

Die drehmomentabhängig arbeitende Kupplung 30 arbeitet bei der zweiten Ausführungsform mit zwei konischen Reibflächen. Das mit der Werkzeugfläche 38 versehene Antriebselement 35 weist einen ersten Konus auf. Dieser bildet den ersten Kupplungspartner 43 der Überlastkupplung. Ein korrespondierender Konus an dem ein- oder mehrteiligen Gehäuse 45 bildet den zweiten Kupplungspartner 44, welcher über die zwischengeschalteten Getriebeelemente 37, 17 in einer mittelbaren Drehverbindung mit der Drehhülse 16 steht.

Das übertragbare Drehmoment ist einstellbar, wozu sich ein Federelement 48 mit seinem ersten Ende gegen das Antriebselement 35, und mit seinem zweiten Ende gegen einen Federsitz an dem Gehäuse 45 abstützt. Um ein Verwinden des Federelements 48 zu vermeiden, stützt sich das Federelement 48 gehäuseseitig nicht unmittelbar gegen das Gehäuse 45 ab, sondern gegen ein Axiallager 49, welches seinerseits in dem Gehäuse 45 abgestützt ist.

Der Abstand der Federsitze und damit die Länge des Federelements 48 ist einstellbar. Zu diesem Zweck ist das Gehäuse 45 zweigeteilt und setzt sich aus miteinander über ein Gewinde 47 verschraubten Gehäuseteilen 45A, 45B zusammen.

Bei beiden beschriebenen Ausführungsformen kann ein Getriebeelement der Getriebeanordnung 15 mit einem Drehwinkelsensor versehen sein. Dieser erfasst einen Drehwinkel, welcher im Laufe des Anziehens der Mutter 3 bis zum Erreichen des Drehmomentmaximalwerts insgesamt zurückgelegt wird. Der erfasste Drehwinkel kann entweder der Drehwinkel der Drehhülse 16 und damit der Mutter 3 selbst sein, oder ein Drehwinkel, den eines der sich drehenden Getriebeelemente der Getriebeanordnung 15 ausführt. Auch der so erfasste Winkelwert kann in dem Dokumentationsmodul gespeichert werden.

### Bezugszeichenliste

- 2: Gewindebolzen
- 2A: Gewindeendabschnitt
- 3: Mutter, Gewindemutter
- 5: Maschinenteil
- 5A: Unterlage
- 6: Maschinenteil
- 7: Zylindergehäuse
- 8: Stützrohr
- 10: Handwerkzeug
- 11: Spannvorrichtung
- 12: Wechselbuchse
- 13: Innengewinde
- 14: Antriebsmehrkant
- 15: Getriebeanordnung
- 16: Mitnehmer, Drehhülse
- 17: Getriebeelement
- 18: Antriebsgehäuse
- 20: Hydraulikanschluss
- 21: Arbeitsraum
- 25: Kolben
- 27: Stufe
- 28: Öffnung
- 30: drehmomentabhängig arbeitende Kupplung
- 31: Scheibe, zweiter Kupplungspartner
- 32: Scheibe, zweiter Kupplungspartner
- 33: Scheibe, erster Kupplungspartner
- 35: Antriebselement
- 36: Schraube
- 37: Getriebeelement
- 38: Werkzeugfläche
- 39: Deckel
- 40: Schraube
- 41: Kupplungsmodul
- 42: Formschlusselement
- 43: Konus, erster Kupplungspartner
- 44: Konus, zweiter Kupplungspartner
- 45: Gehäuse
- 45A: Gehäuseteil
- 45B: Gehäuseteil
- 47: Gewinde
- 48: Federelement
- 49: Axiallager

## Patentansprüche

1. Spannvorrichtung für eine Schraubverbindung bestehend aus einem Gewindebolzen und einer Gewindemutter, mit einem die Gewindemutter umgebenden Stützrohr (8), einem Zylindergehäuse (7) in Verlängerung des Stützrohrs (8), einem in dem Zylindergehäuse (7) mittels Hydraulikdruck bewegbaren Kolben (25), einer durch den Kolben (25) axial mitnehmbaren Wechselbuchse (12), welche mit einem Innengewinde (13) zum Verschrauben der Wechselbuchse (12) mit dem Gewindebolzen versehen ist, einem innerhalb des Stützrohrs (8) angeordneten, mit der Gewindemutter kraft- oder formschlüssig verbindbaren Mitnehmer (16), und einer Getriebeanordnung (15) zwischen einem außerhalb des Stützrohrs (8) drehgelagerten Antriebselement (35), welches mit einer Werkzeugfläche (38) zum Ansetzen eines Handwerkzeugs (10) versehen ist, und dem Mitnehmer (16), **dadurch gekennzeichnet, dass** Bestandteil der Getriebeanordnung (15) eine drehmomentabhängig arbeitende Kupplung (30) ist, wobei Bestandteile der drehmomentabhängig arbeitenden Kupplung (30) druckbelastet gegeneinander abgestützte Kupplungspartner sind, dass ein erster Kupplungspartner (33, 43) in einer mittel- oder unmittelbaren Drehverbindung mit dem Antriebselement (35), und ein zweiter Kupplungspartner (31, 32, 44) in einer mittel- oder unmittelbaren Drehverbindung mit dem Mitnehmer (16) dreht.

2. Spannvorrichtung nach Anspruch 1, **dadurch gekennzeichnet, dass** die drehmomentabhängig arbeitende Kupplung (30) eine Überlastkupplung ist, vorzugsweise eine Rutschkupplung.

3. Spannvorrichtung nach Anspruch 1 oder 2, **gekennzeichnet durch** Mittel (36, 48) zum Einstellen der Größe der Druckbelastung zwischen den Kupplungspartnern (33, 43, 31, 32, 44).

4. Spannvorrichtung nach einem der vorangehenden Ansprüche, **dadurch gekennzeichnet, dass** die Kupplungspartner (43, 44) durch mindestens ein Federelement (48) druckbelastet gegeneinander abgestützt sind.

5. Spannvorrichtung nach Anspruch 4, **dadurch gekennzeichnet, dass** das Federelement (48) mit seinem ersten Ende gegen einen ersten Federsitz und mit seinem zweiten Ende gegen einen zweiten Federsitz abgestützt ist, und dass der Abstand der Federsitze zueinander einstellbar ist.

6. Spannvorrichtung nach einem der vorangehenden Ansprüche, **dadurch gekennzeichnet, dass** an den Kupplungspartnern jeweils flächig aneinander abgestützte Reibflächen ausgebildet sind.

7. Spannvorrichtung nach einem der vorangehenden Ansprüche, **gekennzeichnet durch** ein zumindest Teile der Getriebeanordnung (15) umschließendes Antriebsgehäuse (18), welches außen auf einem Umfangsbereich des Stützrohrs (8) befestigt ist, auf dem das Stützrohr (8) mit einer Öffnung (28) versehen ist, wobei sich ein Getriebeelement (17) der Getriebeanordnung (15) in die Öffnung (28) hinein erstreckt.

8. Spannvorrichtung nach Anspruch 7, **dadurch gekennzeichnet, dass** das Getriebeelement (17) im Eingriff mit dem Mitnehmer (16) steht.

9. Spannvorrichtung nach Anspruch 7 oder 8, **dadurch gekennzeichnet, dass** das Antriebselement (35) und die drehmomentabhängig arbeitende Kupplung (30) in dem Antriebsgehäuse (18) angeordnet sind.

10. Spannvorrichtung nach Anspruch 7 oder 8, **dadurch gekennzeichnet, dass** das Antriebselement (35) und die drehmomentabhängig arbeitende Kupplung (30) Bestandteile eines an das Antriebsgehäuse (18) lösbar angesetzten Kupplungsmoduls (41) sind.

11. Spannvorrichtung nach Anspruch 10, **dadurch gekennzeichnet, dass** Bestandteil des Kupplungsmoduls (41) außerdem ein Formschlusselement (42) ist, welches in lösbarem Eingriff mit einem in dem Antriebsgehäuse (18) gelagerten Getriebeelement (37) steht, wobei die drehmomentabhängig arbeitende Kupplung (30) zwischen dem Antriebselement (35) und dem Formschlusselement (42) angeordnet ist.

12. Spannvorrichtung nach einem der vorangehenden Ansprüche, **dadurch gekennzeichnet, dass** der Mitnehmer (16) eine drehbar in dem Stützrohr (8) angeordnete Drehhülse ist, die an ihrer Innenseite mit Formschlussstrukturen zur Verbindung mit der Gewindemutter versehen ist.

## Claims

1. Clamping device for a screw connection consisting of a threaded bolt and a threaded nut, having a support tube (8) surrounding the threaded nut, a cylinder housing (7) in the extension of the support tube (8), a piston (25) which is movable in the cylinder housing (7) by means of hydraulic pressure, an exchange bushing (12) which is axially entrainable by the piston (25) and which is provided with an internal thread (13) for screwing the exchange bushing (12) to the threaded bolt, an entrainer element (16) which is arranged inside the support tube (8) and which is non-positively or positively connectable to the threaded nut, and a gear arrangement (15) between a drive element (35), which is rotatably mounted outside the support tube (8) and which is provided with a tool surface (38) for applying a hand tool (10), and the entrainer element (16), **characterized in that** a clutch (30), which operates as a function of the torque, is a component of the gear arrangement (15), wherein components of the clutch (30), which operates as a function of the torque, are clutch partners which are supported against one another under compressive stress, **in that** a first clutch partner (33, 43) rotates in an indirect or direct rotational connection with the drive element (35) and a second clutch partner (31, 32, 44) rotates in an indirect or direct rotational connection with the entrainer element (16).

2. Clamping device according to Claim 1, **characterized in that** the clutch (30), which operates as a function of the torque, is an overload clutch, preferably a slipping clutch.

3. Clamping device according to Claim 1 or 2, **characterized by** means (36, 48) for adjusting the extent of the compressive stress between the clutch partners (33, 43, 31, 32, 44).

4. Clamping device according to one of the preceding claims, **characterized in that** the clutch partners (43, 44) are supported against one another under compressive stress by at least one spring element (48) .

5. Clamping device according to Claim 4, **characterized in that** the spring element (48) is supported with its first end against a first spring seat and is supported with its second end against a second spring seat, and **in that** the spacing of the spring seats relative to one another is adjustable.

6. Clamping device according to one of the preceding claims, **characterized in that** in each case friction surfaces, which are supported flat against one another, are configured on the clutch partners.

7. Clamping device according to one of the preceding claims, **characterized by** a drive housing (18) which encloses at least parts of the gear arrangement (15) and which is fastened externally to a peripheral region of the support tube (8), the support tube (8) being provided with an opening (28) thereon, wherein a gear element (17) of the gear arrangement (15) extends into the opening (28).

8. Clamping device according to Claim 7, **characterized in that** the gear element (17) is in engagement with the entrainer element (16).

9. Clamping device according to Claim 7 or 8, **characterized in that** the drive element (35) and the clutch (30), which operates as function of the torque, are arranged in the drive housing (18).

10. Clamping device according to Claim 7 or 8, **characterized in that** the drive element (35) and the clutch (30), which operates as a function of the torque, are components of a clutch module (41) which is releasably applied to the drive housing (18).

11. Clamping device according to Claim 10, **characterized in that** a positive connection element (42), which is releasably engaged with a gear element (37) which is mounted in the drive housing (18), is also a component of the clutch module (41), wherein the clutch (30), which operates as a function of the torque, is arranged between the drive element (35) and the positive connection element (42).

12. Clamping device according to one of the preceding claims, **characterized in that** the entrainer element (16) is a rotary sleeve which is rotatably arranged in the support tube (8) and which is provided on its inner face with positive connecting structures for connecting to the threaded nut.

## Revendications

1. Dispositif de serrage pour une liaison par vis constituée d'un boulon fileté et d'un écrou fileté, comprenant un tube de support (8) entourant l'écrou fileté, un boîtier de cylindre (7) dans le prolongement du tube de support (8), un piston (25) mobile dans le boîtier de cylindre (7) au moyen d'une pression hydraulique, une douille interchangeable (12) pouvant être entraînée axialement par le piston (25), qui est pourvue d'un filetage intérieur (13) pour visser la douille interchangeable (12) avec le boulon fileté, un entraîneur (16) agencé à l'intérieur du tube de support (8), pouvant être relié à l'écrou fileté par adhérence ou par complémentarité de forme, et un agencement de transmission (15) entre un élément d'entraînement (35) monté en rotation à l'extérieur du tube de support (8), qui est pourvu d'une surface d'outil (38) pour la mise en place d'un outil à main (10), et l'entraîneur (16), **caractérisé en ce qu'**un constituant de l'agencement de transmission (15) est un accouplement fonctionnant en fonction du couple (30), des constituants de l'accouplement fonctionnant en fonction du couple (30) étant des partenaires d'accouplement en appui l'un contre l'autre de manière chargée en pression, **en ce qu'**un premier partenaire d'accouplement (33, 43) tourne dans une liaison de rotation directe ou indirecte avec l'élément d'entraînement (35), et un deuxième partenaire d'accouplement (31, 32, 44) tourne dans une liaison de rotation directe ou indirecte avec l'entraîneur (16).

2. Dispositif de serrage selon la revendication 1, **caractérisé en ce que** l'accouplement fonctionnant en fonction du couple (30) est un accouplement de surcharge, de préférence un accouplement à friction.

3. Dispositif de serrage selon la revendication 1 ou 2, **caractérisé par** des moyens (36, 48) pour régler la valeur de la charge de pression entre les partenaires d'accouplement (33, 43, 31, 32, 44).

4. Dispositif de serrage selon l'une quelconque des revendications précédentes, **caractérisé en ce que** les partenaires d'accouplement (43, 44) s'appuient l'un contre l'autre de manière chargée en pression par au moins un élément de ressort (48).

5. Dispositif de serrage selon la revendication 4, **caractérisé en ce que** l'élément de ressort (48) s'appuie par sa première extrémité contre un premier siège de ressort et par sa deuxième extrémité contre un deuxième siège de ressort, et **en ce que** la distance des sièges de ressort l'un par rapport à l'autre est réglable.

6. Dispositif de serrage selon l'une quelconque des revendications précédentes, **caractérisé en ce que** des surfaces de friction s'appuyant à plat l'une contre l'autre sont réalisées sur chacun des partenaires d'accouplement.

7. Dispositif de serrage selon l'une quelconque des revendications précédentes, **caractérisé par** un boîtier d'entraînement (18) entourant au moins des parties de l'agencement de transmission (15), qui est fixé à l'extérieur sur une zone périphérique du tube de support (8), sur laquelle le tube de support (8) est pourvu d'une ouverture (28), un élément de transmission (17) de l'agencement de transmission (15) s'étendant dans l'ouverture (28).

8. Dispositif de serrage selon la revendication 7, **caractérisé en ce que** l'élément de transmission (17) est en prise avec l'entraîneur (16).

9. Dispositif de serrage selon la revendication 7 ou 8, **caractérisé en ce que** l'élément d'entraînement (35) et l'accouplement fonctionnant en fonction du couple (30) sont agencés dans le boîtier d'entraînement (18).

10. Dispositif de serrage selon la revendication 7 ou 8, **caractérisé en ce que** l'élément d'entraînement (35) et l'accouplement fonctionnant en fonction du couple (30) font partie d'un module d'accouplement (41) mis en place de manière amovible sur le boîtier d'entraînement (18).

11. Dispositif de serrage selon la revendication 10, **caractérisé en ce qu'**un constituant du module d'accouplement (41) est en outre un élément à complémentarité de forme (42), qui est en prise amovible avec un élément de transmission (37) monté dans le boîtier d'entraînement (18), l'accouplement fonctionnant en fonction du couple (30) étant agencé entre l'élément d'entraînement (35) et l'élément à complémentarité de forme (42).

12. Dispositif de serrage selon l'une quelconque des revendications précédentes, **caractérisé en ce que** l'entraîneur (16) est une douille rotative agencée de manière rotative dans le tube de support (8), qui est pourvue sur son côté intérieur de structures à complémentarité de forme pour la liaison avec l'écrou fileté.
